# EUROPEAN PATENT SPECIFICATION

(11) **EP 2 288 107 B1**
(45) Date of publication and mention of the grant of the patent: **02.04.2014**
(21) Application number: 10189236.2
(22) Date of filing: 17.01.2006
(51) Int. Cl.: H04W 12/06, H04L 29/06, H04L 12/18

(54) **Authentication using GAA functionality for unidirectional network connections**
Authentifizierung mittels GAA-Funktionalität für unidirektionaleNetzwerkverbindungen
Authentification au moyen d'une fonctionnalité GAA pour connexions de réseau unidirectionnelles

(30) Priority: 19.04.2005 US 108848; 03.02.2005 EP 05002300
(43) Date of publication of application: 23.02.2011
(62) Divisional of application: 06710685.6
(73) Proprietor: Nokia Corporation, 02150 Espoo (FI)
(72) Inventor: Laitinen, Pekka, 00800, Helsinki (FI)
(74) Representative: Ruuskanen, Juha-Pekka

(56) References cited:
- EP-A- 1 492 381
- US-A1- 2005 015 583
- "Universal Mobile Telecommunications System (UMTS); Generic Authentication Architecture (GAA); Generic bootstrapping architecture (3GPP TS 33.220 version 6.3.0 Release 6); ETSI TS 133 220", ETSI STANDARDS, EUROPEAN TELECOMMUNICATIONS STANDARDS INSTITUTE, SOPHIA-ANTIPO, FR, vol. 3-SA3, no. V630, December 2004 (2004-12), XP014028221, ISSN: 0000-0001

## Description

### Field of the invention

The present invention relates to methods, network entities, a system, and a computer program product for authentication between a client entity and a network, wherein the client entity is not able to communicate with the network in a bidirectional manner. In particular, the present invention relates to authentication using functionalities in accordance with a generic authentication architecture, GAA, in e.g. broadcast scenarios.

### Background of the invention

In recent years, various kinds of communication systems, in particular mobile and/or IP-based (IP: Internet Protocol) communication systems, as well as a multitude of services offered in these systems have been developed.

In such advanced communication systems, such as e.g. Third Generation mobile communication networks currently under development by the Third Generation Partnership Program (3GPP), aspects relating to security and trustworthiness are playing a more and more important role.

Starting from the concept of subscriber certificates, which support services that mobile operators provide and whose provision assists mobile operators, and in consideration of a need for more generic security capabilities, 3GPP standardization work lately concentrated on the evolution of a generic authentication architecture (GAA).

Generic Authentication Architecture is known from the ETSI STANDARD: "Universal Mobile Telecommunications System (UMTS); Generic Authentication Architecture (GAA); Generic bootstrapping architecture (3GPP TS 33.220 version 6.3.0 Release 6); ETSI TS 133 220".

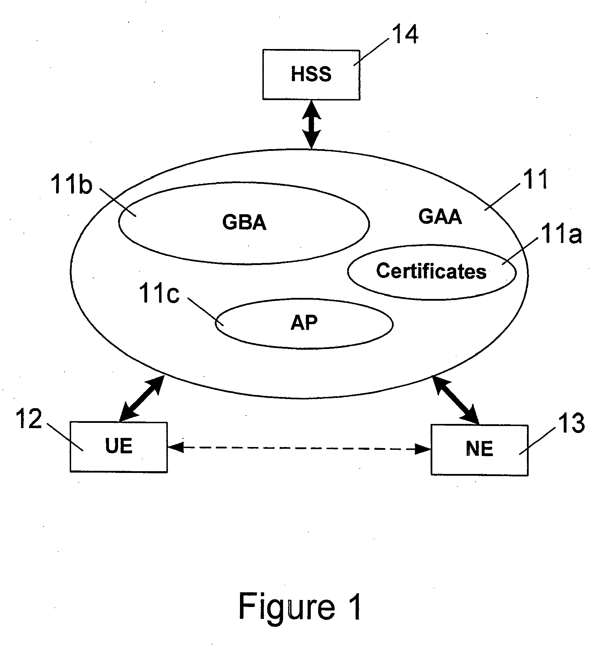

As can be gathered from Figure 1 showing an overview of a generic authentication architecture environment in interrelation with a home subscriber system HSS 14, a user equipment UE 12, and a network entity NE 13, GAA 11 basically consists of three sub-aspects. That is, a generic bootstrapping architecture (GBA) 11b, subscriber certificates 11a, and an authentication proxy (AP) 11c e.g. based on HTTPS (Secure Hypertext Transport Protocol). Thereby, the generic bootstrapping architecture (GBA) also builds a basis for both the other sub-aspects in that GBA offers generic authentication capability for various applications based on a shared secret. Usually, GBA functionality is to bootstrap authentication and key agreement for application security, and it is based on the HTTP Digest AKA (Authentication and Key Agreement) mechanism in accordance with IETF RFC 3310.

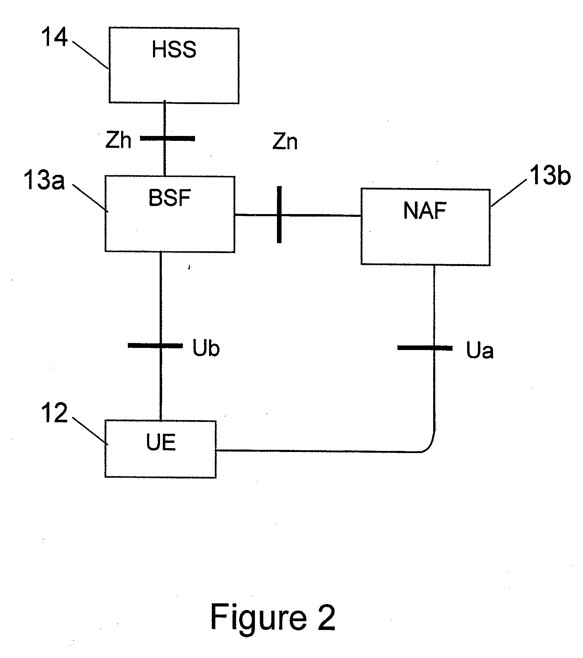

In Figure 2, there is illustrated a network model for generic bootstrapping. A bootstrapping server function BSF 13a and the user equipment UE 12, which are connected via a bidirectional link Ub, mutually authenticate using the AKA protocol, and agree on session keys. These keys are afterwards to be used for a bootstrapping session and to be used between the user equipment 12 and an operator-controlled network application function NAF 13b which is also connected to the user equipment 12 by means of a bidirectional link Ua. After the bootstrapping procedure, which is described in detail below, the user equipment 12 and the network application function 13b can run some application-specific protocol where the authentication of messages will be based on those session keys generated during mutual authentication. Accordingly, GAA/GBA can in general be regarded as a 3-party authentication scenario, wherein the bootstrapping server function 13a is further connected to a home subscriber system HSS 14 maintaining e.g. user security settings (USS).

The reference points (interfaces) between the individual entities in Figure 2 are denoted by Ub, Ua, Zn, and Zh. The interfaces Zn and Zh are based on Diameter (according to the Diameter Base Protocol which is specified in IETF RFC 3588), the interface Ub is based on a reuse of HTTP Digest AKA messages, and the protocol used on the interface Ua depends on the application to be executed.

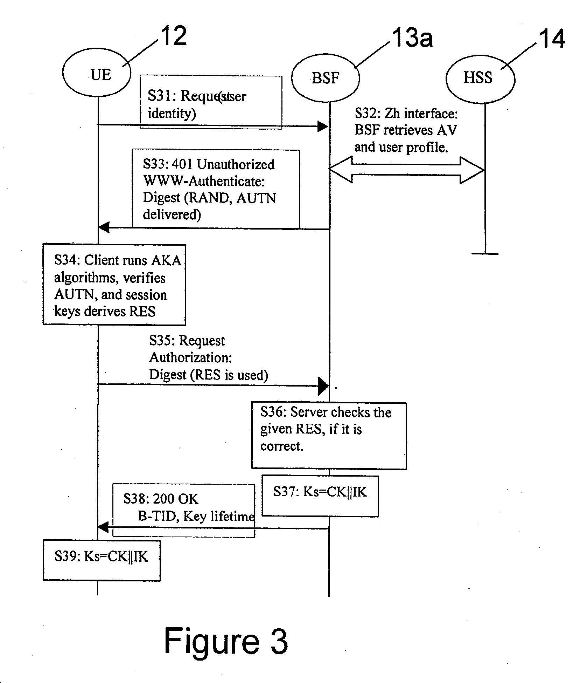

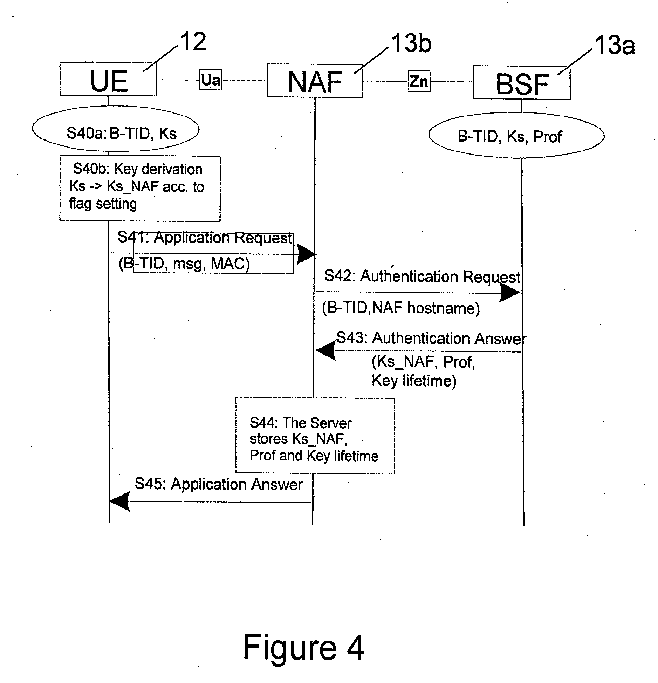

The utilization of the generic bootstrapping architecture is divided into two phases. The first phase, i.e. the (generic) bootstrapping procedure as such, is illustrated in Figure 3, and the second phase, i.e. the generic bootstrapping usage procedure, is illustrated in Figure 4.

In the bootstrapping procedure according to Figure 3, the user equipment UE 12 sends an HTTP request towards the bootstrapping server function BSF 13a (step S31). In step S32, the BSF 13a retrieves the user profile and a challenge, i.e. authentication vector (AV), over the Zh interface from the home subscriber system HSS 14. Then, in step S33, the BSF 13a forwards authentication parameters RAND and AUTN to the UE 12 in order to demand the UE 12 to authenticate itself. The UE 12 calculates a message authentication code (MAC) so as to verify the challenge from the authenticated network, as well as calculates session keys CK, IK, and RES. Thus, the session keys CK, IK, and RES are available in both BSF 13a and UE 12. In step S35, the UE 12 sends again a request to the BSF 13a, and the BSF 13a checks in step S36 whether the received parameter is calculated using RES and is equal to the parameter that is similarly calculated using XRES which has been obtained before as a part of the authentication vector from the HSS 14. If these parameters are equal, the UE 12 is authenticated, and the BSF 13a generates a key ("master key") Ks by concatenating the session keys CK and IK (step S37). The key Ks is then used for securing the Ua interface. In step S38, the BSF 13a sends an OK message including a transaction identifier B-TID and other possible data (such as for example a lifetime of the key Ks) to the UE 12, by means of which the success of the authentication is indicated. By concatenating the session keys CK and IK, the key Ks for securing the Ua interface is then also generated at the UE 12 (step S39). Therewith, a bootstrapping session between the user equipment (client) and the bootstrapping server function has been started successfully.

In Figure 4, an example procedure using a bootstrapped security association is depicted. After having initiated a bootstrapping session (S40a), the UE 12 can start to communicate with the network application function NAF 13b. Thereby, the master key Ks generated during bootstrapping procedure in the UE 12 and in the BSF 13a is used to derive the NAF-specific key Ks_NAF (step S40b). An application request (step S41) includes the transaction identifier B-TID obtained during bootstrapping, an application- specific dataset denoted by msg, and all credentials being denoted by MAC. In step S42, the NAF 13b requests one or more keys and possibly user profile data corresponding to the information supplied by the UE 12 over the Zn interface from the BSF 13a. Such a request can e.g. be based on the transaction identifier. Between steps S42 and S43, the NAF-specific key Ks_NAF is generated in the BSF entity 13a. In step S43, the BSF 13a responds by supplying the requested key or keys (including Ks_NAF and an application-specific part of the user profile being denoted by Prof) to the NAF 13b, which the NAF 13b uses directly, or with which the NAF 13b derives further keys required to protect the protocol used over the Ua interface towards UE 12, which is an application-specific functionality and not addressed in GAA specifications. Such a derivation is performed in the same way as the UE 12 did beforehand.

Then, the NAF entity 13b stores (step S44) at least the parameters Ks_NAF, Prof, and the lifetime of the key. Afterwards, the NAF 13b continues with the protocol used over the Ua interface by sending an application answer to the UE 12 (step S45).

For further details on the generic bootstrapping architecture, reference is made to the technical specification 3GPP TS 33.220 (version 6.3.0) of December 2004.

In view of the conventional generic authentication architecture and generic bootstrapping architecture described above, there arises the following problem.

In summary, the normal conventional 3GPP GAA behavior is that a client, i.e. a user equipment, bootstraps with the BSF entity using an AKA authentication vector. As a result, so called GAA credentials are obtained which consist of a shared key Ks and a bootstrapping transaction identifier (B-TID). These GAA credentials are further used to derive a server-specific key (Ks_NAF). The NAF-specific keys (i.e. B-TID and Ks_NAF) can then be used between the client UE and the server NAF, such as e.g. as username/password in existing protocols, which case is denoted by the term "generic".

The conventional bootstrapping procedure requires the client to have a bidirectional connection to the BSF entity, and the subsequent use of the NAF-specific credentials between the UE and the NAF typically requires this as well. Thus, the problem resides in that the conventional GAA and/or GBA mechanisms do not work, i.e. cannot be used for authentication, in case there is no return channel from the user equipment to the network. An example for such a scenario are broadcast networks, e.g. the user equipment being a set-top box (STB; or digibox) for digital video broadcasting. In such a scenario, GAA and/or GBA according to the prior art cannot be used as the UE can neither bootstrap with the BSF nor communicate with the NAF in a bidirectional manner, as is required.

In a contribution to the DVB-H (Digital Video Broadcasting for Handhelds) consortium and the ETSI (European Telecommunication Standards Institute), Vodafone presented a proposal for an interface for a USIM card-based element of the mechanism used to derive keys for service protection. However, this proposal is not suitable to overcome the problem described above and the related drawbacks.

Thus, a solution to the above problem and drawbacks is needed for providing security in such scenarios which are becoming more and more important for future use.

### Summary of the invention

Consequently, it is an object of the present invention to remove the above drawbacks inherent to the prior art and to provide accordingly improved methods, network entities, a system, and a computer program product.

The present invention is defined by the subject matter of the independent claims.
Preferred embodiments are defined by the dependent claims.

By means of the present invention, the GAA/GBA concept is thus broadened in its area of application.

### Brief description of the drawings

In the following, the present invention will be described in greater detail by means of embodiments thereof with reference to the accompanying drawings, in which
Figure 1 illustrates an overview of a generic authentication architecture environment,
Figure 2 illustrates a network model for generic bootstrapping,
Figure 3 illustrates a generic bootstrapping procedure according to the prior art,
Figure 4 illustrates a generic bootstrapping usage procedure according to the prior art,
Figure 5 illustrates a signaling diagram of a method according to a first embodiment of the present invention,
Figure 6 illustrates a signaling diagram of a method according to a second embodiment of to the present invention,
Figure 7 illustrates a signaling diagram of a method according to a third embodiment of the present invention,
Figure 8 illustrates a block diagram of a client entity according to an embodiment of the present invention,
Figure 9 illustrates a block diagram of a network application function entity according to an embodiment of the present invention, and
Figure 10 illustrates a block diagram of a bootstrapping server function entity according to an embodiment of the present invention.

### Detailed description of embodiments of the present invention

The present invention is described herein by means of embodiments thereof with reference to particular non-limiting example scenarios. A person skilled in the art will appreciate that the invention is not limited to these examples, and may be more broadly applied.

The present invention and its embodiments are exemplarily directed to cases for GAA and/or GBA environments where a client or user equipment does not have a return channel back to the network. With the network comprising at least a network application function entity and a bootstrapping server function entity, this means that a user equipment (client entity) is not able to communicate with both of the network entities in a bidirectional manner. Stated in other words, this means that the user equipment (client entity) lacks a bidirectional connection, i.e. a return channel, to the network application function entity, or to the bootstrapping server function entity, or to both of these entities.

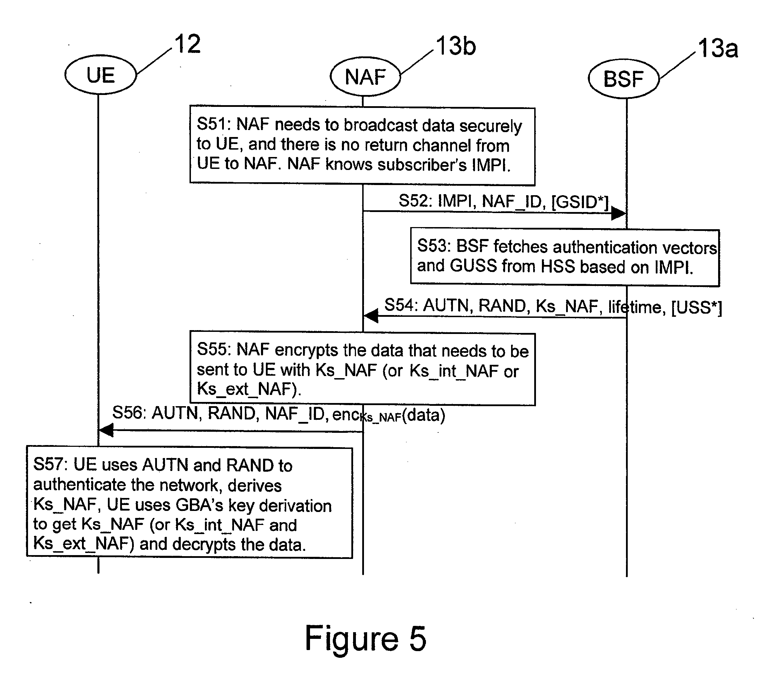

Figure 5 illustrates a signaling diagram of a method according to a first embodiment of the present invention. Figure 5 depicts a scenario where the client entity or user equipment UE 12 has no return channel to the network, i.e. the client entity is not able to communicate with both the network application function (NAF) entity 13b and the bootstrapping server function (BSF) entity 13a in a bidirectional manner. Thus, the client entity cannot perform a bootstrapping procedure with the BSF entity. An example for such a scenario may be a set-top box (STB; or digibox) which is equipped with a UICC (Universal Integrated Circuits Card) card reader.

A method for performing authentication between the client entity and the network so as to utilize GAA functionalities is described below.

In step S51, the NAF entity 13b needs to deliver some data (e.g., broadcast keys) to the client UE 12. The NAF entity 13b knows the private identity of the subscriber, i.e. the subscriber's IMPI (IP Multimedia core network subsystem private identity), and the data that need to be delivered to the UE 12. In step S52, the NAF entity 13b sends a request including the subscriber's IMPI, its own identity NAF_ID (i.e., NAF hostname), and optionally one or more GSIDs (GAA service identifiers for requesting NAF-specific user security settings) over the Zn reference point to the bootstrapping server function (BSF) entity 13a.

It is to be noted that the transmittal of the request (of step 2) may be triggered by a means different from the client entity. For example in the case of DVB-H, the authentication (bootstrapping) procedure or the need for such may be triggered in the network (for example in the NAF entity itself) by a need for updating broadcast keys in the terminal entity.

Upon receipt of the request from the NAF entity 13b, the BSF entity 13a checks in step S53 whether the NAF entity 13b is authorized to request authentication information, e.g. a network authentication element (AUTN) and a random challenge (RAND). If so, the BSF entity 13a fetches authentication vectors from a home subscriber system HSS 14, calculates the NAF entity's key Ks_NAF based on the NAF entity's identity NAF_ID and other key derivation parameters. It also extracts the requested user security settings USSs (if any) from subscriber's GBA user security settings (GUSS).

In a fourth step S54, the BSF entity 13a then sends the parameters AUTN, RAND, Ks_NAF, lifetime of Ks_NAF, and the requested USSs (if any) to the NAF entity 13b. The NAF 13b uses the key Ks_NAF to encrypt (or otherwise secure) the data to be transmitted to the client entity 12 (step S55). Optionally, in the case of UICC-enabled GBA (i.e. GBA_U) either of keys Ks_int_NAF and Ks_ext_NAF may be used for this purpose. However, the functionality of encrypting (as well as the below decrypting) is optional.

In step S56, the NAF entity 13b uses the broadcast channel between itself and the UE 12 to send parameters AUTN, RAND, NAF_ID, and the encrypted data to the UE 12. AUTN, RAND, NAF_ID, and the encrypted data itself may be further protected with other known means (e.g., by using a public key of the device certificate of the UE). When the UE 12 receives the data from the NAF 13b, it first uses the parameters AUTN and the RAND to authenticate the network. If this is successful, it will derive the bootstrapping key (Ks) from session keys CK and IK, and continue to derive the NAF-specific key Ks_NAF using Ks, NAF_ID, and other key derivation parameters. It can then decrypt the data using the key Ks_NAF, and take the data (e.g., broadcast keys) into use in the UE 12.

Consequently, the Ub reference point is not used at all in the presented method.

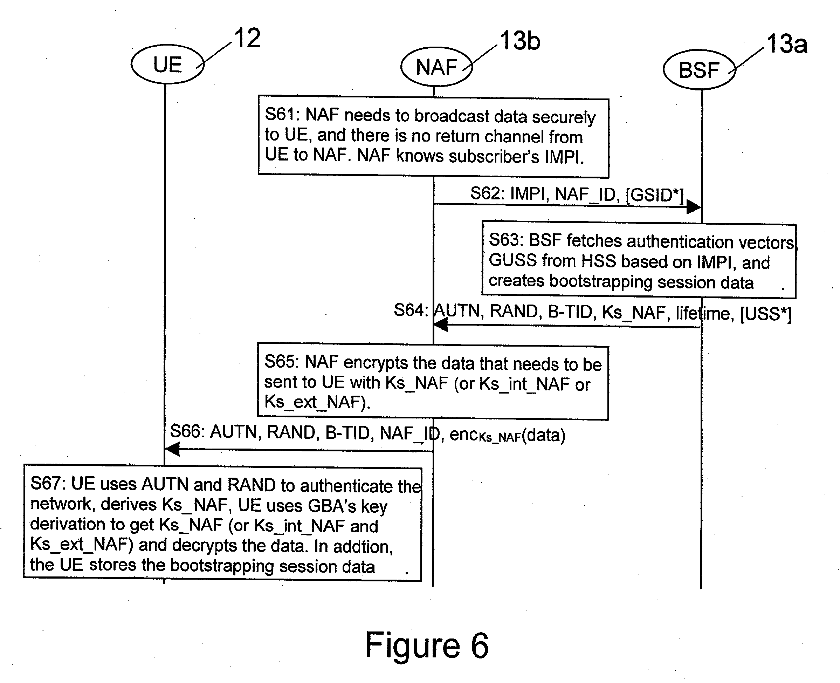

Figure 6 illustrates a signaling diagram of a method according to an example. There is again depicted a scenario where the client entity UE 12 has no return channel to the network, and thus cannot perform a bootstrapping procedure directly with the BSF 13a entity. Rather, the bootstrapping takes place with the aid of a NAF entity. Hence, such a procedure may be referred to as *reverse bootstrapping.*

A reverse bootstrapping procedure according to the present embodiment takes place between the client entity UE 12 and the bootstrapping server function entity BSF 13a via a network application function entity NAF 13b. The procedure is described below.

In step S61, the NAF entity 13b needs to deliver some data (e.g., broadcast keys) to the client UE 12. The NAF entity 13b knows the identity of the subscriber, i.e. the subscriber's IMPI (see above), and the data that need to be delivered to the UE 12. According to conventional procedures, the UE 12 has always a connection to the NAF entity 13b and delivers a bootstrapping transaction identifier B-TID before the NAF entity 13b is able to request corresponding GBA keys from the BSF entity 13a.

In the method according to the example, the NAF entity 13b is triggered to fetch the GBA data by some other means.

The NAF entity 13b in step S62 sends the subscriber's IMPI, its own NAF_ID (i.e., NAF hostname), and optionally one or more GSIDs (GAA service identifiers for requesting NAF-specific user security settings) over the Zn reference point to the BSF entity 13a. According to conventional procedures, the identifier B-TID is used to fetch the GBA keys from the BSF 13a. In contrast thereto, the NAF entity 13b here uses the subscriber's IMPI to fetch the GBA data from the BSF 13a.

Upon receipt of the request from the NAF entity 13b, the BSF 13a checks in step S63 whether the NAF entity 13b is authorized to request authorization information such as parameters like AUTN and RAND, and be part of a reverse bootstrapping procedure according to the present embodiment. If so, the BSF entity 13a fetches authentication vectors from a home subscriber system HSS 14, calculates the key Ks_NAF based on the identity NAF_ID and other key derivation parameters. It also extracts the requested user security settings USSs (if any) from subscriber's GUSS. Then, still in step S63, the BSF entity 13a creates bootstrapping session data for the subscriber that can be used later with other NAFs 13b, too.

According to procedures of the prior art, the BSF entity 13a should contain the existing bootstrapping session data (identified by the bootstrapping transaction identifier B-TID), and calculate the key Ks_NAF as mentioned also above. In contrast thereto, the BSF entity 13a according to this embodiment creates bootstrapping session data without communicating with the client entity UE 12, which are to be used for calculation of Ks_NAF and a selection of USSs. In step S64, the BSF entity 13a sends parameters AUTN, RAND, B-TID, Ks_NAF, lifetime of the Ks_NAF, and the requested USSs (if any) to the NAF. Also AUTN, RAND, and B-TID is returned to the NAF. The NAF then (in step 5) optionally uses the key Ks_NAF to encrypt (or otherwise secure) the data to be transmitted. According to the current specifications, this is a NAF-specific functionality. (Note that GBA specifications are very open on what happens in the NAF 13b and how the NAF 13b uses the GBA keys.) As mentioned above, the functionality of encrypting (and decrypting) of data to be transmitted is purely optional in the framework of performing authentication.

In step S66, the NAF entity uses the (unidirectional) broadcast channel between itself and the UE 12 to send parameters AUTN, RAND, B-TID, NAF_ID, and the encrypted data to the UE 12. AUTN, RAND, NAF_ID, and the encrypted data itself may be further protected with other means (e.g., by OMA DRM 2.0 [2] and by using a public key of the device certificate of the UE 12).

According to current prior art standards, the identifier B-TID is transferred from the UE 12 to the NAF 13b. This would have taken place already before step S61 in a normal GBA procedure. According to the present example, the identifier B-TID as well as the parameters AUTN and the RAND are sent from the NAF entity 13b to the client UE 12.

When the UE receives the data from the NAF 13b (step S67), it first uses the parameters AUTN and RAND to authenticate the network. If this is successful, it will derive the bootstrapping key (Ks) from session keys CK and IK, and continue to derive the NAF-specific key Ks_NAF using Ks, NAF_ID, and other key derivation parameters. It can then decrypt the data using the key Ks_NAF, and take the data (e.g., broadcast keys) into use in the UE 12. The UE 12 may also be configured to store the bootstrapping session data that can be used later with another NAF 13b. The UE 12 then establishes a bootstrapping session by means of the received parameters B-TID, AUTN, and RAND. Also, in the present example, the key derivation is handled at this stage of the procedure (as the bootstrapping session became valid). The UE 12 may also use a newly created bootstrapping session with other NAFs 13b as long as the session is valid or a bootstrapping session is created.

Also here, the Ub reference point is not used at all in the presented method.

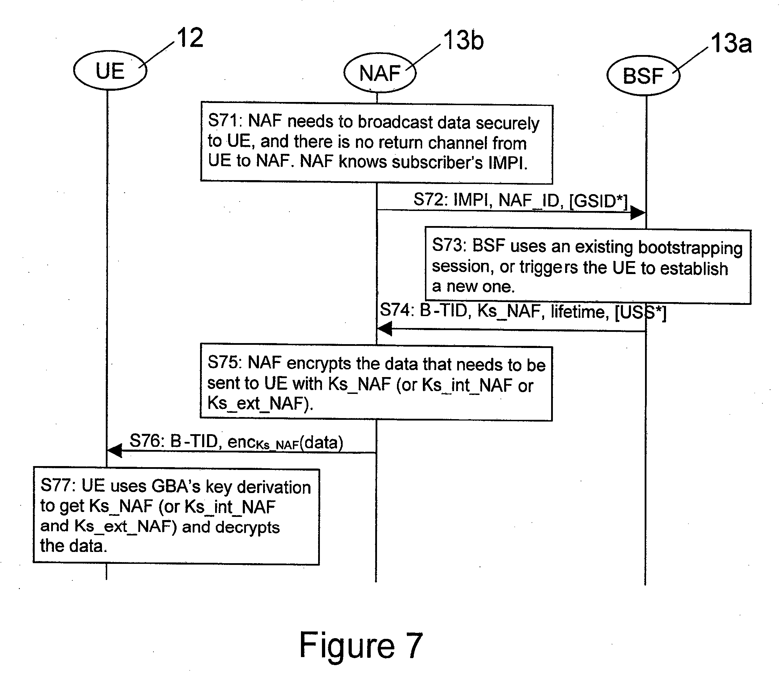

Figure 7 illustrates a signaling diagram of a further method according to a further example. There is depicted a scenario where the client UE 12 has no return channel to the NAF entity 13b but does have such a bidirectional connection to other network elements such as the BSF 13a. That is, similar to the above scenarios, the client entity UE 12 is not able to communicate with both of the relevant network elements NAF 13b and BSF 13a in a bidirectional manner. However, in the present case, the client can perform a bootstrapping procedure with the BSF entity 13a. An example for such a scenario may be a mobile terminal that has 3G functionalities, e.g. IP connectivity, but it is also equipped with a facility to receive for example digital video broadcast for handheld terminals, i.e. is DVB-H enabled.

This scenario assumes that the UE 12 either has a valid bootstrapping session with the BSF 13a all the time (this could be a configuration option in the UE 12), or that the BSF 13a is able to trigger the UE 12 to run a bootstrapping session establishment (e.g., by using the Session Initiation Protocol (SIP)). The present method utilizes GAA functionalities is described below.

In step S71, the NAF entity 13b needs to deliver some data (e.g., broadcast keys) to the client entity UE 12. It knows the identity of subscriber, i.e. its IMPI, and the data that need to be delivered to the UE 12. The NAF entity 13b then sends the subscriber's IMPI, its NAF_ID (i.e., NAF hostname), and optionally one or more GSIDs (GAA service identifiers for requesting NAF-specific user security settings) over the Zn reference point (step S72). Up to this point, the method is rather similar to the one of the second embodiment above.

Upon receipt of the request from the NAF entity 13b, the BSF entity 13a checks in step S73 whether the subscriber has a valid bootstrapping session, and can be found in its databases. If it is not present, the BSF entity 13a can either indicate an error to the NAF entity 13b or trigger the client entity UE 12 to run a bootstrapping establishing procedure. The BSF entity 13a then calculates the key Ks_NAF based on the identity NAF_ID and other key derivation parameters. It also extracts the requested user security settings USSs (if any) from subscriber's GUSS. The BSF entity 13a sends the parameters B-TID, Ks_NAF, lifetime of the Ks_NAF, the requested USSs (if any) to the NAF entity 13b. Thus, the NAF entity 13b learns the valid bootstrapping transaction identifier B-TID when it receives this from the BSF entity 13a. In the fifth step, the NAF entity 13b may optionally use its key Ks_NAF to encrypt (or otherwise secure) the data to be transmitted. The NAF entity 13b uses the broadcast channel between itself and the UE 12 to send the parameters B-TID, NAF_ID, and the encrypted data to the client entity UE. The parameters B-TID, NAF_ID, and the encrypted data itself may be further protected with other means (e.g., by OMA DRM 2.0 [2] and by using a public key of the device certificate of the UE 12).

When the UE 12 in step S77 receives the data from the NAF entity 13b, it uses B-TID and NAF_ID to derive the NAF-specific key Ks_NAF using Ks (identified by B-TID), NAF_ID, and other key derivation parameters. It can then, if encrypted, decrypt the data using the Ks_NAF, and take the data (e.g., broadcast keys) into use in the UE 12. The functionality related to the GBA key usage in the UE 12 (as in the NAF 13b, see step S75) is NAF-specific. The key derivation is handled at this stage of the procedure.

The extensions/modifications when implementing the methods into a GBA architecture according to the prior art are the following:
- the NAF 13b is able to request AUTN and RAND (but not RES, CK, IK) and the GBA key derived from CK and IK (i.e. Ks_NAF, for example) by using subscriber's private identity (e.g. IMPI or IMSI) instead of B-TID;
- the BSF 13a is able to create a bootstrapping session data for a subscriber based on NAF's request for AUTN and RAND;
- in addition to normal data returned from the BSF 13a, also AUTN and RAND are returned (but not RES, CK, IK);
- the UE 12 is able to create a bootstrapping session data based on AUTN, RAND, B-TID, and key lifetime received from the NAF 13b; and
- the NAF 13b is able to request bootstrapping session data (B-TID, NAF-specific, etc.) by using the subscriber's IMPI.

As a further example, there is conceivable a case where the client entity 12 cannot reach the BSF 13a, but has a 2-way channel to the NAF 13b. For example, this is the case when the UE 12 uses GBA for access authentication. The basic reverse GBA protocol cannot be used because the NAF 13b does not know the IMPI of the subscriber of the UE 12. Such a scenario could also be present for example in a WLAN (Wireless Local Area Network) case, where the client entity 12 needs to authenticate but only has a connection for example to an EAP (Extensible Authentication Protocol) server which could operate as the NAF entity 13b in such a case.

Accordingly, the client entity UE 12 performs a bootstrapping procedure (with the BSF entity 13a) via the NAF entity 13b. Signaling is similar to the above described procedures except that, before the first step, the UE 12 contacts the NAF entity 13b and sends its private identity IMPI.

A still further example resides in a case where the NAF entity 13b has only a unidirectional channel to the UE 12, but the BSF 13a has a bidirectional channel to the UE 12.

In this example, it is possible that
(1) the NAF entity 13b triggers the UE 12 to establish a valid bootstrapping session; or
(2) the NAF entity 13b triggers the BSF entity 13a so as to trigger an unsolicited bootstrapping procedure with the client entity UE 12.

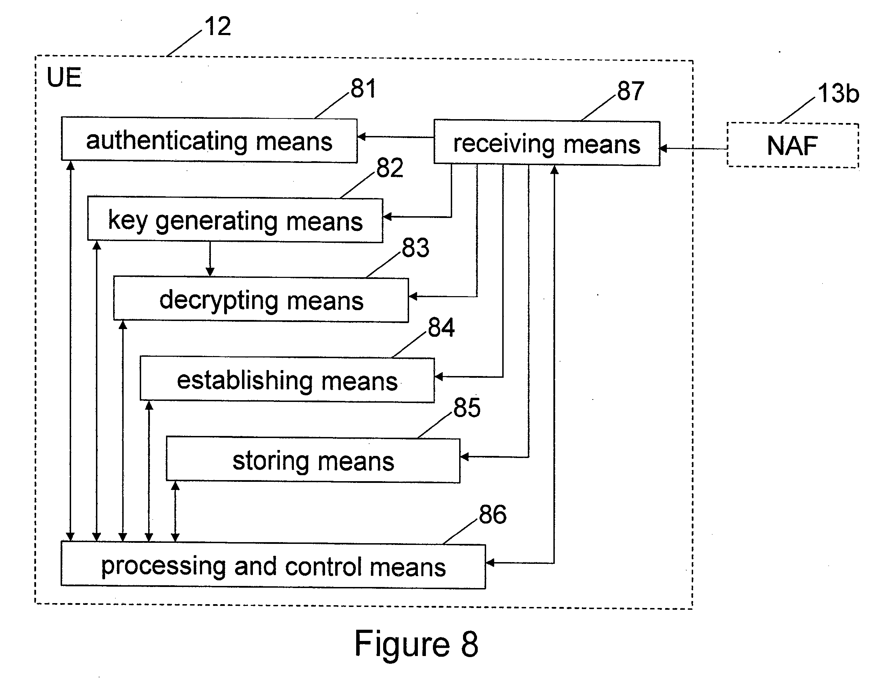

Figure 8 illustrates a block diagram of a client entity according to an example.

A client entity 12 according to one example comprises receiving means 87 for receiving transmissions from the network application function NAF entity 13b and authenticating means 81 for authenticating the network using the received authentication information.

According to further example, the client entity UE 12 optionally further comprises one or more of the following (as can be gathered from Figure 8):
- key generating means 82 for generating a key of the network application function entity (e.g. Ks_NAF);
- establishing means 84 for establishing a bootstrapping session between the client entity 12 and the bootstrapping server function entity 13a;
- storing means 85 for storing bootstrapping session data; and/or
- decrypting means 83 for decrypting encrypted data received from the network application function entity 13b using a key of the network application function entity 13b, which is supplied from the key generating means 82.

The client entity 12 according to the example shown in Figure 8 further comprises processing and control means 86 which is configured to process data and signaling, and to control the client entity 12 as a whole as well as its constituents, such as e.g. the establishing means 84. For this purpose, the processing and control means 86 have bidirectional data and/or control connections to any one of the constituent means shown.

The client entity according to the present example further comprises at least a user equipment and/or is connectable to a universal subscriber identity module in accordance with e.g. 3GPP standards.

Further, the client entity according to still another example of the present invention is a set-top box (or digibox). If so, the client entity being such a set-top box is configured to be operated according to any appropriate known technique, such as for example according to DVB-H standards.

In the above example, the authenticating means 81 of the client entity is configured to access user identity information available at the client entity. Such user identity information are for example used, in addition to received authentication information, for authentication purposes. These user identity information are for example stored in a smart-card connectable to the client entity, such as e.g. a UICC, a universal subscriber identity module (USIM), or a smart-card enabled for use according to DVB-H standards.

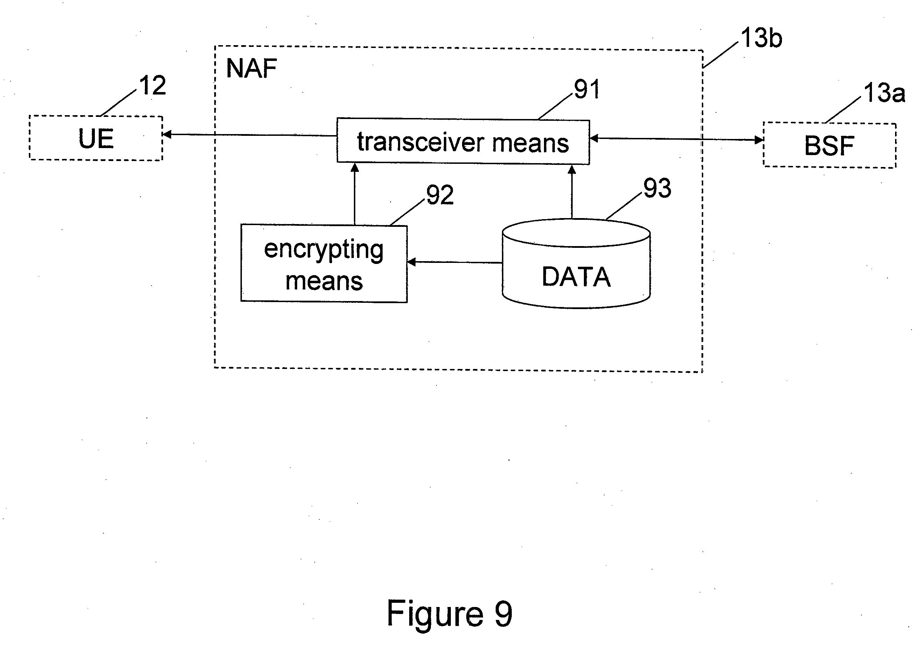

Figure 9 illustrates a block diagram of a network application function entity according to an example.

A network entity, in particular a network application function entity 13b, according to one example comprises transceiver means 91 which are configured to send transmissions to a client entity 12, and to send to and receive from a bootstrapping server function entity 13a. The transceiver means 91 is e.g. configured to transmit a request for authentication information to the bootstrapping server function entity 13a when the network application function entity 13b needs to securely transmit data to the client entity 12, to receive a response including the authentication information from the bootstrapping server function entity 13a, and to transmit the authentication information and the data to be transmitted to the client entity 12.

According to further examples, the network application function NAF entity 13b optionally further comprises encrypting means 92 for encrypting the data to be transmitted to the client entity 12 using the key of the network application function entity 13b itself. According to Figure 9, the data to be transmitted are represented by a database symbol labeled DATA 93.

Furthermore, the transceiver means 91 could be configured for transmitting an identity of the network application function entity 13b to the client entity 12. Such an identity may also be stored in the same database DATA 93 as the date to be transmitted.

The network entity according to a further example of the present invention is configured to broadcast transmissions, e.g. to the client entity UE.

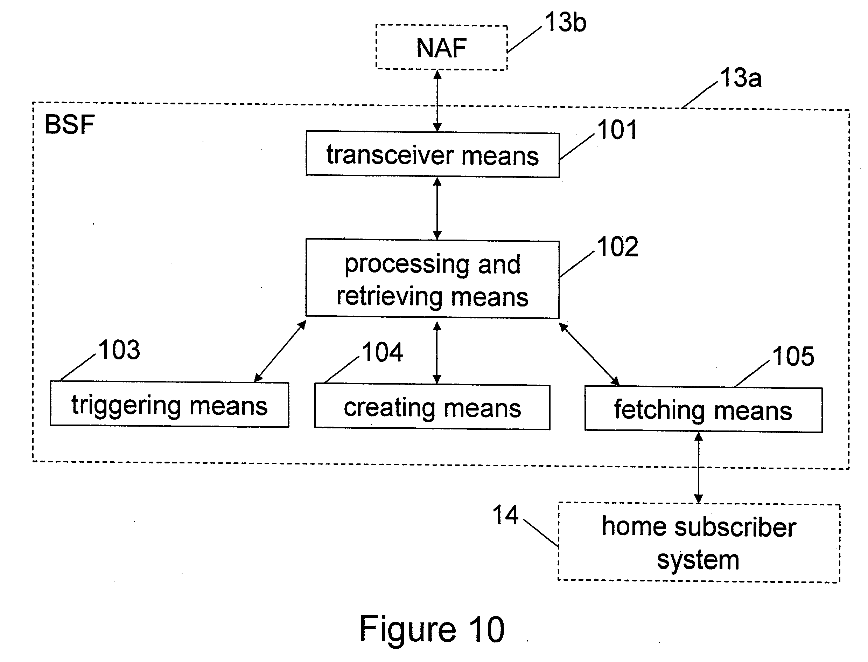

Figure 10 illustrates a block diagram of a bootstrapping server function entity according to an example.

A network entity, in particular a bootstrapping server function BSF entity 13a, according to one example comprises transceiver means 101 for sending to and receiving from a network application function entity 13b, and processing and retrieving means 102 for processing a request received from the network application function entity 13b and for retrieving authentication information. In the present embodiment, the transceiver means 101 is particularly configured for receiving the request from the network application function entity 13b and for transmitting the authentication information to the network application function 13b entity.

According to further examples, the bootstrapping server function entity BSF 13a optionally further comprises one or more of the following (as can be gathered from Figure 10):
- fetching means 105 for fetching the authentication information from a home subscriber system HSS 14;
- creating means 104 for creating bootstrapping session data; and/or
- triggering means 103 for triggering the client entity 12 to establish a valid bootstrapping session.

A system according to an example comprises at least one client entity 12 (which may optionally be a set-top box), at least one network application function entity 13b, and at least one bootstrapping server function entity 13a according to Figures 8 to 10.

It is to be noted that in Figures 8 to 10 only those means and functional elements are depicted which are associated with the example. For the sake of simplicity, other means and functional elements which are known by a skilled person to form a part of any of the depicted apparatuses in their conventional structures are omitted.

In general, it is to be noted that the mentioned functional elements, i.e. the UE, the BSF, and the NAF according to the present invention, and their constituents can be implemented by any known means, either in hardware and/or software, respectively, as long as it is configured to perform the described functions of the respective parts. For example, the authenticating means of the client entity can be implemented by any data processing unit, e.g. a microprocessor, being configured to authenticate the network using the received authentication information according to the method of the present invention. The mentioned parts can also be realized in individual functional blocks or by individual means, or one or more of the mentioned parts can be realized in a single functional block or by a single means. Correspondingly, the above illustration of Figures 8 to 10 is only for illustrative purposes and does not restrict an implementation of the present invention anyhow.

In summary, there are disclosed methods, a client entity, network entities, a system, and a computer program product for performing authentication between a client entity and a network, the network comprising at least a bootstrapping server function entity and a network application function entity, and wherein the client entity is not able to communicate with both of the network entities in a bidirectional manner, wherein the standard Ub reference point between the client entity and the bootstrapping server function entity is not utilized for authentication purposes. In short, the application discloses authentication using GAA functionality for unidirectional network connections.

According to an advantageous aspect of the present invention, the network is a broadcast network.

Even though the invention is described above with reference to the examples according to the accompanying drawings, it is clear that the invention is not restricted thereto. Rather, it is apparent to those skilled in the art that the present invention can be modified in many ways without departing from the scope of the inventive idea as disclosed in the appended claims.

This application is a divisional application of European patent application no. 06 710 685.6 (the "parent" application), also published under no. EP-A-1 844 595.

## Claims

1. An apparatus (12),
said apparatus being operable as a client entity (12) within an authentication architecture performing authentication between the client entity, UE, and a network, the network comprising at least a bootstrapping server function entity, BSF, (13a) and a network application function entity, NAF, (13b) wherein the client entity, UE, is operable to have a unidirectional network connection lacking at least a return channel from the client entity to the network application function entity, NAF, said apparatus comprising:
receiving means (87) for receiving when there is no valid bootstrapping session between the client entity and the bootstrapping server function entity, BSF, from the network application function entity, authentication information from the bootstrapping server function entity and data to be transmitted from the network application function entity to the client entity, and
authenticating means (81) for authenticating the network using the received authentication information, wherein said authenticating comprises performing an authentication including a generic authentication in accordance with a generic authentication architecture.

2. The apparatus according to claim 1, wherein
the authentication information comprise at least a random challenge parameter, a network authentication parameter, or a key of the network application function entity, and
the receiving means is adapted to receive an identity of the network application function entity.

3. The apparatus according to any one of claims 1 to 2, further comprising key generating means (82) for generating a key of the network application function entity.

4. A method, comprising
performing authentication between a client entity, UE, and a network comprising at least a bootstrapping server function entity, BSF, and a network application function entity, NAF, wherein the client entity, UE, has a unidirectional network connection lacking at least a return channel from the client entity to the network application function entity, NAF, the authentication comprising
receiving (S56, S76) when there is no valid bootstrapping session between the client entity and the bootstrapping server function entity, BSF, from the network application function entity, authentication information from the bootstrapping server function and data to be transmitted from the network application function entity, and
authenticating (S57, S77) the network using the received authentication information, wherein said authenticating comprises performing an authentication including a generic authentication in accordance with a generic authentication architecture.

5. The method according to claim 4, wherein
the authentication information comprise at least a random challenge parameter, a network authentication parameter, or a key of the network application function entity, and
the receiving from the network application function entity further includes receiving an identity of the network application function entity.

6. The method according to any one of claims 4 to 5, further comprising generating a key of the network application function entity.

7. A computer program embodied on a computer-readable medium, the computer program configured to load into a memory of a digital processing means and to control said digital processing means to perform the method according to any one of claims 4 to 6.

8. An apparatus (13b),
said apparatus being operable as a network application function entity within an authentication architecture performing authentication between a client entity, UE, (12) and a network, the network comprising at least the apparatus operating as a network application function entity, NAF, (13b) and a bootstrapping server function entity, BSF, (13a) wherein the client entity, UE, is operable to have a unidirectional network connection lacking at least a return channel from the client entity to the network application function entity, NAF, the apparatus comprising:
transceiver means (91) for sending to the client entity, and for sending to and receiving from the bootstrapping server function entity,
wherein the transceiver means is adapted for
transmitting a request for authentication information to the bootstrapping server function entity, said request comprising a private identity of the client entity, when the network application function entity needs to securely transmit data to the client entity,
receiving a response including the authentication information from the bootstrapping server function entity, and
transmitting the authentication information and the data to be transmitted to the client entity when there is no valid bootstrapping session between the client entity and the bootstrapping server function entity, BSF,
wherein said authentication information are adapted for an authentication including a generic authentication in accordance with a generic authentication architecture.

9. The apparatus according to claim 8, wherein
the authentication information included in the response comprise at least a random challenge parameter, a network authentication parameter, or a key of the network application function entity, and
the transmitting to the client entity further includes transmitting an identity of the network application function entity.

10. A method, comprising
performing authentication between a client entity, UE, (12) and a network comprising at least a bootstrapping server function entity, BSF, (13a) and a network application function entity, NAF, (13b) wherein the client entity (UE) has a unidirectional network connection lacking at least a return channel from the client entity to the network application function entity, NAF, the authentication comprising
transmitting (S52, S72) a request for authentication information to the bootstrapping server function entity, said request comprising a private identity of the client entity, when the network application function entity needs to securely transmit data to the client entity,
receiving (S54, S74) a response including the authentication information from the bootstrapping server function entity, and
transmitting (S56, S76) the authentication information and the data to be transmitted to the client entity when there is no valid bootstrapping session between the client entity and the bootstrapping server function entity, BSF,
wherein said authentication information are adapted for an authentication including a generic authentication in accordance with a generic authentication architecture.

11. The method according to claim 10, wherein
the authentication information included in the response comprise at least a random challenge parameter, a network authentication parameter, or a key of the network application function entity, and
the transmitting to the client entity further includes transmitting an identity of the network application function entity.

12. A computer program embodied on a computer-readable medium, the computer program configured to load into a memory of a digital processing means and to control said digital processing means to perform the method according to any one of claims 10 and 11.

13. An apparatus (13a),
said apparatus being operable as a bootstrapping server function entity within an authentication architecture performing authentication between a client entity, UE, and a network, the network comprising at least the apparatus operating as a bootstrapping server function entity, BSF, and a network application function entity, NAF, wherein the client entity, UE, is operable to have a unidirectional network connection lacking at least a return channel from the client entity to the network application function entity, NAF, the apparatus comprising:
transceiver means (101) for sending to and receiving from the network application function entity, and
processing and retrieving means (102) for processing a request received from the network application function entity, said request comprising a private identity of the client entity, and for retrieving authentication information,
wherein the transceiver means (101) is configured to receive the request from the network application function entity when there is no valid bootstrapping session between the client entity and the bootstrapping server function entity, BSF, and to transmit the authentication information to the network application function entity,
wherein said authentication information are adapted for an authentication including a generic authentication in accordance with a generic authentication architecture.

14. The apparatus according to claim 13, wherein
the processing and retrieving means (102) is adapted such that the processing includes fetching the authentication information from a home subscriber system,
the authentication information comprise at least a random challenge parameter, a network authentication parameter, or a key of the network application function entity.

15. A method, comprising
performing authentication between a client entity, UE, and a network comprising at least a bootstrapping server function entity, BSF, and a network application function entity, NAF, wherein the client entity, UE, has a unidirectional network connection lacking at least a return channel from the client entity to the network application function entity, NAF, the authentication comprising
receiving (S52, S72) a request for authentication information from the network application function entity when there is no valid bootstrapping session between the client entity and the bootstrapping server function entity, BSF, said request comprising a private identity of the client entity,
processing (S53, S73) the request received from the network application function entity and retrieving authentication information, further,
transmitting (S54, S74) a response including the authentication information to the network application function entity,
wherein said authentication information are adapted for an authentication including a generic authentication in accordance with a generic authentication architecture.

16. The method according to claim 15, wherein
the processing includes fetching the authentication information from a home subscriber system,
the authentication information comprise at least a random challenge parameter, a network authentication parameter, or a key of the network application function entity.

17. A computer program embodied on a computer-readable medium, the computer program configured to load into a memory of a digital processing means and to control said digital processing means to perform the method according to any one of claims 15 to 16.

## Patentansprüche

1. Vorrichtung (12),
wobei die Vorrichtung als eine Client-Entität (12) innerhalb einer Authentifikationsarchitektur, die die Authentifikation zwischen der Client-Entität, UE, und einem Netz ausführt, arbeitet, wobei das Netz wenigstens eine Urladeserver-Funktionsentität, BSF, (13a) und eine Netzanwendungs-Funktionsentität, NAF, (13b) umfasst, wobei die Client-Entität, UE, arbeitet, um eine unidirektionale Netzverbindung aufzuweisen, die wenigstens einen Rückwärtskanal von der Client-Entität zu der Netzanwendungs-Funktionsentität, NAF, benötigt, wobei die Vorrichtung Folgendes umfasst:
Empfangsmittel (87) zum Empfangen, wenn es keine gültige Urladesitzung zwischen der Client-Entität und der Urladeserver-Funktionsentität, BSF, von der Netzanwendungs-Funktionsentität gibt, von Authentifikationsinformationen von der Urladeserver-Funktionsentität und Daten, die zu der Client-Entität übertragen werden sollen, von der Netzanwendungs-Funktionsentität und
Authentifikationsmittel (81) zum Authentifizieren des Netzes unter Verwendung der empfangenen Authentifikationsinformationen, wobei die Authentifikation das Ausführen einer Authentifikation, die eine generische Authentifikation in Übereinstimmung mit einer generischen Authentifikationsarchitektur enthält, umfasst.

2. Vorrichtung nach Anspruch 1, wobei
die Authentifikationsinformationen wenigstens einen zufälligen Anforderungsparameter, einen Netz-Authentifikationsparameter oder einen Schlüssel der Netzanwendungs-Funktionsentität umfassen und
die Empfangsmittel ausgelegt sind, eine Kennung der Netzanwendungs-Funktionsentität zu empfangen.

3. Vorrichtung nach einem der Ansprüche 1 bis 2, die ferner Schlüsselerzeugungsmittel (82) zum Erzeugen eines Schlüssels der Netzanwendungs-Funktionsentität umfasst.

4. Verfahren, das Folgendes umfasst:
Ausführen der Authentifikation zwischen einer Client-Entität, UE, und einem Netz, das wenigstens eine Urladeserver-Funktionsentität, BSF, und eine Netzanwendungs-Funktionsentität, NAF, umfasst, wobei die Client-Entität, UE, eine unidirektionale Netzverbindung aufweist, die wenigstens einen Rückwärtskanal von der Client-Entität zu der Netzanwendungs-Funktionsentität, NAF, benötigt, wobei die Authentifikation Folgendes umfasst:
Empfangen (S56, S76), wenn es keine gültige Urladesitzung zwischen der Client-Entität und der Urladeserver-Funktionsentität, BSF, von der Netzanwendungs-Funktionsentität gibt, von Authentifikationsinformationen von der Urladeserver-Funktion und Daten, die gesendet werden sollen, von der Netzanwendungs-Funktionsentität, und
Authentifizieren (557, S77) des Netzes unter Verwendung der empfangenen Authentifikationsinformationen, wobei das Authentifizieren das Ausführen einer Authentifikation, die eine generische Authentifikation in Übereinstimmung mit einer generischen Authentifikationsarchitektur enthält, umfasst.

5. Verfahren nach Anspruch 4, wobei
die Authentifikationsinformationen wenigstens einen zufälligen Anforderungsparameter, einen Netz-Authentifikationsparameter oder einen Schlüssel der Netzanwendungs-Funktionsentität umfassen und
das Empfangen von der Netzanwendungs-Funktionsentität ferner das Empfangen einer Kennung der Netzanwendungs-Funktionsentität enthält.

6. Verfahren nach einem der Ansprüche 4 bis 5, das ferner das Erzeugen eines Schlüssels der Netzanwendungs-Funktionsentität umfasst.

7. Computerprogramm, das auf einem computerlesbaren Medium enthalten ist, wobei das Computerprogramm konfiguriert ist, sich in einem Speicher von digitalen Verarbeitungsmitteln zu laden und die digitalen Verarbeitungsmittel zu steuern, so dass sie das Verfahren nach einem der Ansprüche 4 bis 6 ausführen.

8. Vorrichtung (13b),
wobei die Vorrichtung als eine Netzanwendungs-Funktionsentität innerhalb einer Authentifikationsarchitektur, die eine Authentifikation zwischen einer Client-Entität, UE, (12) und einem Netz ausführt, arbeitet, wobei das Netz wenigstens die Vorrichtung, die als eine Netzanwendungs-Funktionsentität, NAF, (13b) arbeitet, und eine Urladeserver-Funktionsentität, BSF, (13a) umfasst, wobei die Client-Entität, UE, arbeitet, eine unidirektionale Netzverbindung aufzuweisen, die wenigstens einen Rückwärtskanal von der Client-Entität zu der Netzanwendungs-Funktionsentität, NAF, benötigt, wobei die Vorrichtung Folgendes umfasst:
Sende/Empfangsmittel (91) zum Senden zu der Client-Entität und zum Senden zu und Empfangen von der Urladeserver-Funktionsentität,
wobei die Sende/Empfangsmittel ausgelegt sind zum:
Senden einer Anforderung nach Authentifikationsinformationen zu der Urladeserver-Funktionsentität, wobei die Anforderung eine private Kennung der Client-Entität umfasst, wenn die Netzanwendungs-Funktionsentität Daten sicher zu der Client-Entität senden muss,
Empfangen einer Antwort, die die Authentifikationsinformationen enthält, von der Urladeserver-Funktionsentität, und
Senden der Authentifikationsinformationen und der zu sendenden Daten zu der Client-Entität, wenn es keine gültige Urladesitzung zwischen der Client-Entität und der Urladeserver-Funktionsentität, BSF, gibt,
wobei die Authentifikationsinformationen für eine Authentifikation, die eine generische Authentifikation in Übereinstimmung mit einer generischen Authentifikationsarchitektur enthält, ausgelegt sind.

9. Vorrichtung nach Anspruch 8, wobei
die in der Antwort enthaltenen Authentifikationsinformationen wenigstens einen zufälligen Anforderungsparameter, einen Netz-Authentifikationsparameter oder einen Schlüssel der Netzanwendungs-Funktionsentität umfassen und
das Senden zu der Client-Entität ferner das Senden einer Kennung der Netzanwendungs-Funktionsentität enthält.

10. Verfahren, das Folgendes umfasst:
Ausführen der Authentifikation zwischen einer Client-Entität, UE, (12) und einem Netz, das wenigstens eine Urladeserver-Funktionsentität, BSF, (13a) und eine Netzanwendungs-Funktionsentität, NAF, (13b) umfasst, wobei die Client-Entität (UE) eine unidirektionale Netzverbindung aufweist, die wenigstens ein Rückwärtskanal von der Client-Entität zu der Netzanwendungs-Funktionsentität, NAF, benötigt, wobei die Authentifikation Folgendes umfasst:
Senden (S52, S72) einer Anforderung nach Authentifikationsinformationen zu der Urladeserver-Funktionsentität, wobei die Anforderung eine private Kennung der Client-Entität umfasst, wenn die Netzanwendungs-Funktionsentität Daten sicher zu der Client-Entität senden muss,
Empfangen (S54, S74) einer Antwort, die die Authentifikationsinformationen enthält, von der Urladeserver-Funktionsentität, und
Senden (S56, S76) der Authentifikationsinformationen und der zu sendenden Daten zu der Client-Entität, wenn es keine gültige Urladesitzung zwischen der Client-Entität und der Urladeserver-Funktionsentität, BSF, gibt,
wobei die Authentifikationsinformationen für eine Authentifikation, die eine generische Authentifikation in Übereinstimmung mit einer generischen Authentifikationsarchitektur enthält, ausgelegt sind.

11. Verfahren nach Anspruch 10, wobei
die in der Antwort enthaltenen Authentifikationsinformationen wenigstens einen zufälligen Anforderungsparameter, einen Netz-Authentifikationsparameter oder einen Schlüssel der Netzanwendungs-Funktionsentität umfassen und
das Senden zu der Client-Entität ferner das Senden einer Kennung der Netzanwendungs-Funktionsentität enthält.

12. Computerprogramm, das auf einem computerlesbaren Medium enthalten ist, wobei das Computerprogramm konfiguriert ist, sich in einem Speicher von digitalen Verarbeitungsmitteln zu laden und die digitalen Verarbeitungsmittel zu steuern, so dass sie das Verfahren nach einem der Ansprüche 10 und 11 ausführen.

13. Vorrichtung (13a),
wobei die Vorrichtung als eine Urladeserver-Funktionsentität innerhalb einer Authentifikationsarchitektur, die eine Authentifikation zwischen einer Client-Entität, UE, und einem Netz ausführt, arbeitet, wobei das Netz wenigstens die Vorrichtung, die als eine Urladeserver-Funktionsentität, BSF, arbeitet, und eine Netzanwendungs-Funktionsentität, NAF, umfasst, wobei die Client-Entität, UE, arbeitet, um eine unidirektionale Netzverbindung aufzuweisen, die wenigstens einen Rückwärtskanal von der der Client-Entität zu der Netzanwendungs-Funktionsentität, NAF, benötigt, wobei die Vorrichtung Folgendes umfasst:
Sende/Empfangsmittel (101) zum Senden zu und Empfangen von der Netzanwendungs-Funktionsentität, und
Verarbeitungs- und Abfragemittel (102) zum Verarbeiten einer von der Netzanwendungs-Funktionsentität empfangenen Anforderung, wobei die Anforderung eine private Kennung der Client-Entität umfasst, und zum Abfragen von Authentifikationsinformationen,
wobei die Sende/Empfangsmittel (101) konfiguriert sind, die Anforderung von der Netzanwendungs-Funktionsentität zu empfangen, wenn es keine gültige Urladesitzung zwischen der Client-Entität und der Urladeserver-Funktionsentität, BSF, gibt, und die Authentifikationsinformationen zu der Netzanwendungs-Funktionsentität zu senden,
wobei die Authentifikationsinformationen für eine Authentifikation, die eine generische Authentifikation in Übereinstimmung mit einer generischen Authentifikationsarchitektur enthält, ausgelegt sind.

14. Vorrichtung nach Anspruch 13, wobei
die Verarbeitungs- und Abfragemittel (102) ausgelegt sind, so dass das Verarbeiten das Abholen der Authentifikationsinformationen von einem Heimat-Teilnehmersystem enthält,
wobei die Authentifikationsinformationen wenigstens einen zufälligen Anforderungsparameter, einen Netz-Authentifikationsparameter oder einen Schlüssel der Netzanwendungs-Funktionsentität umfassen.

15. Verfahren, das Folgendes umfasst:
Ausführen der Authentifikation zwischen einer Client-Entität, UE, und einem Netz, das wenigstens eine Urladeserver-Funktionsentität, BSF, und eine Netzanwendungs-Funktionsentität, NAF, umfasst, wobei die Client-Entität, UE, eine unidirektionale Netzverbindung aufweist, die wenigstens einen Rückwärtskanal von der Client-Entität zu der Netzanwendungs-Funktionsentität, NAF, benötigt, wobei die Authentifikation Folgendes umfasst:
Empfangen (S52, S72) einer Anforderung nach Authentifikationsinformationen von der Netzanwendungs-Funktionsentität, wenn es keine gültige Urladesitzung zwischen der Client-Entität und der Urladeserver-Funktionsentität, BSF, gibt, wobei die Anforderung eine private Kennung der Client-Entität umfasst,
Verarbeiten (S53, S73) der von der Netzanwendungs-Funktionsentität empfangenen Anforderung und Abfragen von Authentifikationsinformationen, ferner
Senden (S54, S74) einer Antwort, die die Authentifikationsinformationen enthält, zu der Netzanwendungs-Funktionsentität,
wobei die Authentifikationsinformationen für eine Authentifikation, die eine generische Authentifikation in Übereinstimmung mit einer generischen Authentifikationsarchitektur enthält, ausgelegt sind.

16. Verfahren nach Anspruch 15, wobei
die Verarbeitung das Abholen der Authentifikationsinformationen von einem Heimat-Teilnehmersystem enthält,
die Authentifikationsinformationen wenigstens einen zufälligen Anforderungsparameter, einen Netz-Authentifikationsparameter oder einen Schlüssel der Netzanwendungs-Funktionsentität umfassen.

17. Computerprogramm, das auf einem computerlesbaren Medium enthalten ist, wobei das Computerprogramm konfiguriert ist, in einen Speicher von digitalen Verarbeitungsmitteln geladen zu werden und die digitalen Verarbeitungsmittel zu steuern, so dass sie das Verfahren nach einem der Ansprüche 15 bis 16 ausführen.

## Revendications

1. Appareil (12)
ledit appareil étant exploitable comme entité client (12) dans une architecture d'authentification exécutant une authentification entre l'entité client, UE, et un réseau, le réseau comprenant au moins une entité à fonction de serveur d'amorçage, BSF, (13a) et une entité à fonction d'application de réseau, NAF, (13b), dans lequel l'entité client, UE, est exploitable pour avoir une connexion de réseau unidirectionnelle dépourvue d'au moins un canal de retour depuis l'entité client vers l'entité à fonction d'application de réseau, NAF, ledit appareil comprenant :
un moyen de réception (87) pour recevoir quand il n'existe pas de session d'amorçage valable entre l'entité client et l'entité à fonction de serveur d'amorçage, BSF, depuis l'entité à fonction d'application de réseau, des informations d'authentification provenant de l'entité à fonction de serveur d'amorçage et des données à transmettre depuis l'entité à fonction d'application de réseau à l'entité client, et
un moyen d'authentification (81) pour authentifier le réseau en utilisant les informations d'authentification reçues, dans lequel ladite authentification comprend l'exécution d'une authentification comportant une authentification générique selon une architecture d'authentification générique.

2. Appareil selon la revendication 1, dans lequel les informations d'authentification comprennent au moins un paramètre de défi aléatoire, un paramètre d'authentification de réseau, ou une clé de l'entité à fonction d'application de réseau, et le moyen de réception est adapté pour recevoir une identité de l'entité à fonction d'application de réseau.

3. Appareil selon l'une quelconque des revendications 1 à 2, comprenant en outre un moyen de génération de clé (82) pour générer une clé de l'entité à fonction d'application de réseau.

4. Procédé comprenant
l'exécution d'une authentification entre une entité client, UE, et un réseau comprenant au moins une entité à fonction de serveur d'amorçage, BSF, et une entité à fonction d'application de réseau, NAF, dans lequel l'entité client, UE, a une connexion de réseau, unidirectionnelle dépourvue d'au moins un canal de retour depuis l'entité client vers l'entité à fonction d'application de réseau, NAF, l'authentification comprenant :
la réception (S56, S76) quand il n'existe pas de session d'amorçage valable entre l'entité client et l'entité à fonction de serveur d'amorçage, BSF, depuis l'entité à fonction d'application de réseau, d'informations d'authentification provenant de l'entité à fonction de serveur d'amorçage et de données à transmettre depuis l'entité à fonction d'application de réseau, et
l'authentification (S57, S77) du réseau en utilisant les informations d'authentification reçues, dans lequel ladite authentification comprend l'exécution d'une authentification comportant une authentification générique selon une architecture d'authentification générique.

5. Procédé selon la revendication 4, dans lequel les informations d'authentification comprennent au moins un paramètre de défi aléatoire, un paramètre d'authentification de réseau, ou une clé de l'entité à fonction d'application de réseau, et
la réception depuis l'entité à fonction d'application de réseau comporte en outre la réception d'une identité de l'entité à fonction d'application de réseau.

6. Procédé selon l'une quelconque des revendications 4 à 5, comprenant en outre la génération d'une clé de l'entité à fonction d'application de réseau.

7. Programme informatique mis en oeuvre sur un support lisible par ordinateur, le programme informatique étant configuré pour charger dans une mémoire d'un moyen de traitement numérique et commander audit moyen de traitement numérique d'exécuter le procédé selon l'une quelconque des revendications 4 à 6.

8. Appareil (13b)
ledit appareil étant exploitable comme entité de fonction d'application de réseau dans une architecture d'authentification exécutant une authentification entre une entité client, UE, (12), et un réseau, le réseau comprenant au moins l'appareil fonctionnant comme une entité à fonction d'application de réseau, NAF, (13b) et une entité à fonction de serveur d'amorçage, BSF, (13a), dans lequel l'entité client, UE, est exploitable pour avoir une connexion de réseau unidirectionnelle dépourvue d'au moins un canal de retour depuis l'entité client vers l'entité à fonction d'application de réseau, NAF, l'appareil comprenant :
un moyen de transmission-réception (91) pour envoyer à l'entité client et pour envoyer à l'entité à fonction de serveur d'amorçage BSF et recevoir de celle-ci ;
dans lequel le moyen de transmission-réception est adapté pour
transmettre une requête d'informations d'authentification à l'entité à fonction de serveur d'amorçage, ladite requête comprenant une identité privée de l'entité client, quand l'entité à fonction d'application de réseau doit transmettre de manière sécurisée des données à l'entité client,
recevoir une réponse comportant les informations d'authentification depuis l'entité à fonction de serveur d'amorçage, et
transmettre les informations d'authentification et les données à transmettre à l'entité client quand il n'existe pas de session d'amorçage valable entre l'entité client et l'entité à fonction de serveur d'amorçage, BSF,
dans lequel lesdites informations d'authentification sont adaptées pour une authentification comportant une authentification générique selon une architecture d'authentification générique.

9. Appareil selon la revendication 8, dans lequel
les informations d'authentification incluses dans la réponse comprennent au moins un paramètre de défi aléatoire, un paramètre d'authentification de réseau, ou une clé de l'entité à fonction d'application de réseau, et
la transmission à l'entité client comporte en outre la transmission d'une identité de l'entité à fonction d'application de réseau.

10. Procédé, comprenant
l'exécution d'une authentification entre une entité client, UE, (12), et un réseau comprenant au moins une entité à fonction de serveur d'amorçage, BSF, (13a) et une entité à fonction d'application de réseau, NAF, (13b), dans lequel l'entité client (UE) a une connexion de réseau unidirectionnelle dépourvue d'au moins un canal de retour depuis l'entité client vers l'entité à fonction d'application de réseau, NAF, l'authentification comprenant :
la transmission (S52, S72) d'une requête d'informations d'authentification à l'entité à fonction de serveur d'amorçage, ladite requête comprenant une identité privée de l'entité client, quand l'entité à fonction d'application de réseau doit transmettre de manière sécurisée des données à l'entité client,
la réception (S54, S74) d'une réponse comportant les informations d'authentification depuis l'entité à fonction de serveur d'amorçage, et la transmission (S56, S76) des informations d'authentification et des données à transmettre à l'entité client quand il n'existe pas de session d'amorçage valable entre l'entité client et
l'entité à fonction de serveur d'amorçage, BSF,
dans lequel lesdites informations d'authentification sont adaptées pour une authentification comportant une authentification générique selon une architecture d'authentification générique.

11. Procédé selon la revendication 10, dans lequel
les informations d'authentification incluses dans la réponse comprennent au moins un paramètre de défi aléatoire, un paramètre d'authentification de réseau, ou une clé de l'entité à fonction d'application de réseau, et
la transmission à l'entité client comporte en outre la transmission d'une identité de l'entité à fonction d'application de réseau.

12. Programme informatique mis en oeuvre sur un support lisible par ordinateur, le programme informatique étant configuré pour charger dans une mémoire d'un moyen de traitement numérique et commander audit moyen de traitement numérique d'exécuter le procédé selon l'une quelconque des revendications 10 et 11.

13. Appareil (13a)
ledit appareil étant exploitable comme entité à fonction de serveur d'amorçage dans une architecture d'authentification exécutant une authentification entre une entité client, UE, et un réseau, le réseau comprenant au moins l'appareil fonctionnant comme une entité à fonction de serveur d'amorçage, BSF, et une entité à fonction d'application de réseau, NAF, dans lequel l'entité client, UE, est exploitable pour avoir une connexion de réseau unidirectionnelle dépourvue d'au moins un canal de retour depuis l'entité client vers l'entité à fonction d'application de réseau, NAF, l'appareil comprenant :
un moyen de transmission-réception (101) pour envoyer à l'entité à fonction d'application de réseau et recevoir de celle-ci ; et
un moyen de traitement et de recouvrement (102) pour traiter une requête reçue depuis l'entité à fonction d'application de réseau, ladite requête comprenant une identité privée de l'entité client, et pour recouvrer des informations d'authentification,
dans lequel le moyen de transmission-réception (101) est configuré pour recevoir la requête depuis l'entité à fonction d'application de réseau quand il n'existe pas de session d'amorçage valable entre l'entité client et l'entité à fonction de serveur d'amorçage, BSF, et transmettre les informations d'authentification à l'entité à fonction d'application de réseau,
dans lequel lesdites informations d'authentification sont adaptées pour une authentification comportant une authentification générique selon une architecture d'authentification générique.

14. Appareil selon la revendication 13, dans lequel
le moyen de traitement et de recouvrement (102) est adapté de telle sorte que le traitement comporte l'extraction des informations d'authentification depuis un système d'abonné de rattachement ;
les informations d'authentification comportent au moins un paramètre de défi aléatoire, un paramètre d'authentification de réseau, ou une clé de l'entité à fonction d'application de réseau.

15. Procédé, comprenant
l'exécution d'une authentification entre une entité client, UE, et un réseau comprenant au moins une entité à fonction de serveur d'amorçage, BSF, et une entité à fonction d'application de réseau, NAF, dans lequel l'entité client, UE, a une connexion de réseau unidirectionnelle dépourvue d'au moins un canal de retour depuis l'entité client vers l'entité à fonction d'application de réseau, NAF, l'authentification comprenant :
la réception (S52, S72) d'une requête d'informations d'authentification depuis l'entité à fonction d'application de réseau quand il n'existe pas de session d'amorçage valable entre l'entité client et l'entité à fonction de serveur d'amorçage, BSF, ladite requête comprenant une identité privée de l'entité client,
le traitement (S53, S73) de la requête reçue depuis l'entité à fonction d'application de réseau et le recouvrement d'informations d'authentification, en outre
la transmission (S54, S74) d'une réponse comportant les informations d'authentification à l'entité à fonction d'application de réseau, dans lequel lesdites informations d'authentification sont adaptées pour une authentification comportant une authentification générique selon une architecture d'authentification générique.

16. Procédé selon la revendication 15, dans lequel
le traitement comporte l'extraction des informations d'authentification depuis un système d'abonné de rattachement,
les informations d'authentification comprennent au moins un paramètre de défi aléatoire, un paramètre d'authentification de réseau, ou une clé de l'entité à fonction d'application de réseau.

17. Programme informatique mis en oeuvre sur un support lisible par ordinateur, le programme informatique étant configuré pour charger dans une mémoire d'un moyen de traitement numérique et commander audit moyen de traitement numérique d'exécuter le procédé selon l'une quelconque des revendications 15 à 16.
